# EUROPEAN PATENT APPLICATION

(11) **EP 4 712 215 A1**
(43) Date of publication of application: **18.03.2026**
(21) Application number: 24894584.2
(22) Date of filing: 20.11.2024
(51) Int. Cl.: H01M 10/658, H01M 10/625, H01M 50/211, H01M 50/249, B32B 15/00, B32B 27/06

(54) **BATTERY MODULE WHEREIN THERMAL PROPAGATION IS PREVENTED**

(30) Priority: 20.11.2023 KR 20230160984
(71) Applicant: LG Energy Solution, Ltd., Seoul 07335 (KR)
(72) Inventor: KIM, Seok, Daejeon 34122 (KR); PARK, Sangjun, Daejeon 34122 (KR); KIM, Gunryang, Daejeon 34122 (KR); YUN, Seongguk, Daejeon 34122 (KR)
(74) Representative: BCKIP Part mbB
(86) International application number: PCT/KR2024/018343
(87) International publication number: WO 2025/110692

(57) **Abstract**

The present invention provides a structure of a battery module including: a cell laminate including: a plurality of battery cells laminated in widthwise direction; and at least one barrier member interposed between and laminated together with the plurality of battery cells in widthwise direction; and a housing accommodating the cell laminate, wherein each of the at least one barrier member includes a metal layer and insulating layers provided at two widthwise ends of the metal layer, respectively, and a thickness of each of the insulating layers is greater than that of the metal layer.

## Description

### [TECHNICAL FIELD]

This application claims the benefit of priority based on Korean Patent Application No. 10-2023-0160984 filed on November 20, 2023, entire content disclosed in the document of the patent applications is included as a part of this specification.

The present invention relates to a structure of a battery module including a cell laminate with a plurality of pouch-type cells are stacked therein capable of preventing thermal runaway at the module level caused by thermal propagation between cells.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module wherein multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

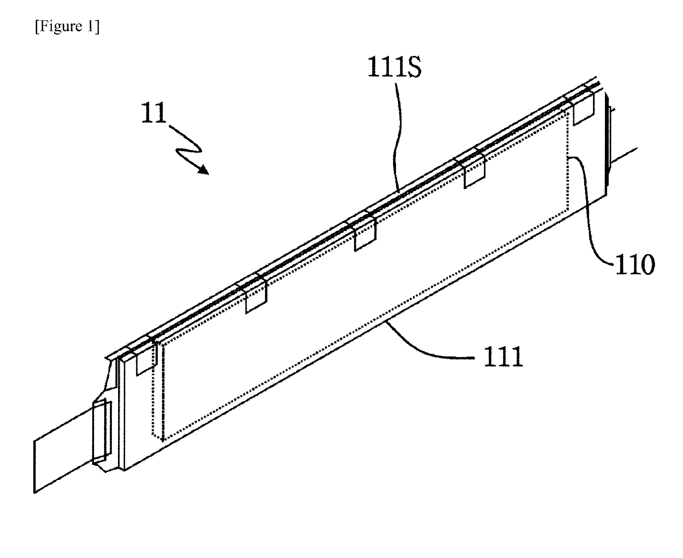

FIG. 1 illustrates a structure of a pouch-type battery cell. Referring to FIG. 1, a general pouch-type battery cell 11 has a structure wherein an electrode assembly 110 is accommodated in a pouch 111. The pouch 111 accommodates the electrode assembly 110 by folding and sealing a sheet in half and is fused and sealed at a sealed portion 111S on one heightwise end. A plurality of battery cell 11 may be laminated to form a cell laminate for higher voltage and/or a higher capacity.

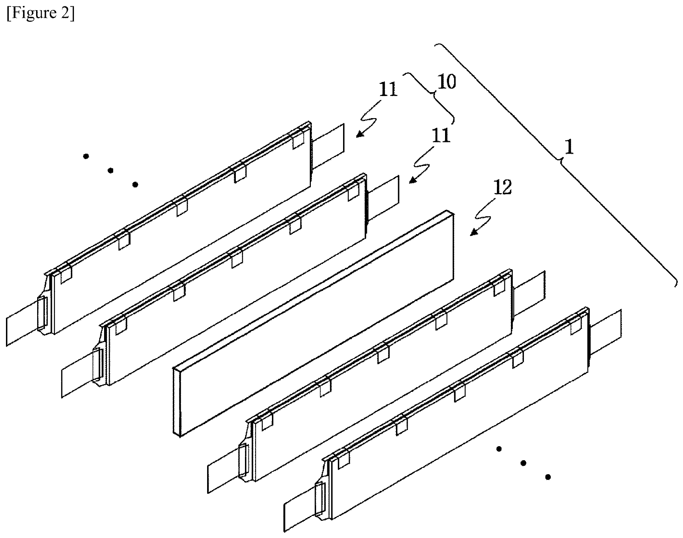

FIG. 2 illustrates the constitution of a cell laminate. Referring to FIG. 2, a plurality of battery cells 11 may be laminated in a widthwise direction to form a cell laminate 1. The cell laminate 1 may also include a barrier member 12 interposed between the battery cells 11 to prevent thermal propagation between the battery cells 11. The battery cells 11 may integrated to form one or more cell banks 10 isolated by the barrier member 12. The cell laminate 1 may be electrically connected to form a single module.

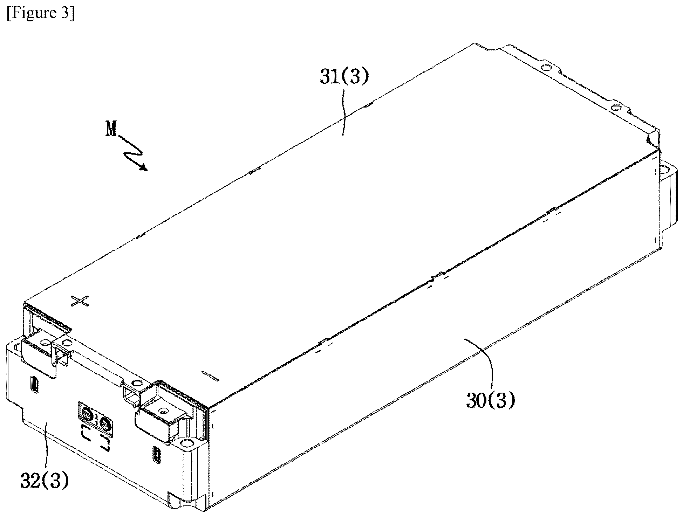

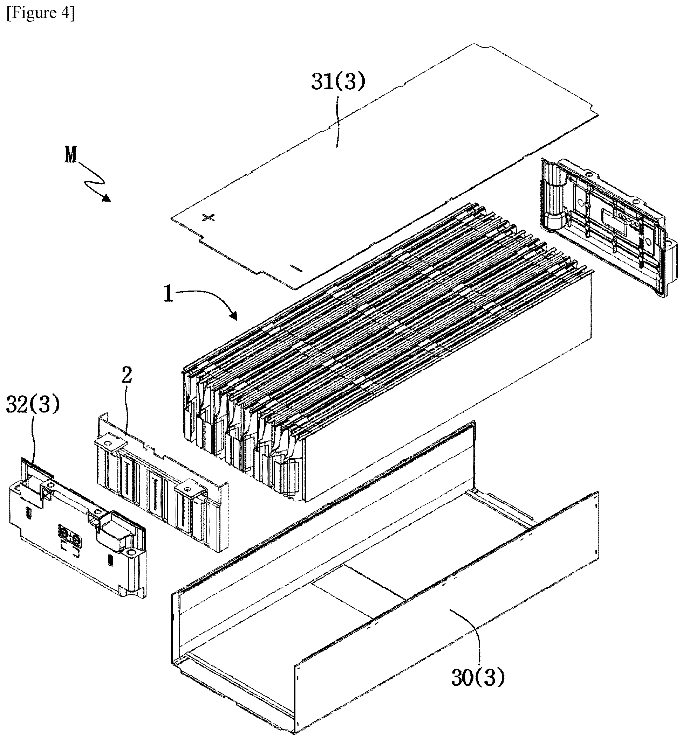

FIGS. 3 and 4 illustrate the structure of a general battery module. Referring to FIGS. 3 and 4, the battery module M may include a bus bar frame assembly 2 connected to the front portion of the cell laminate 1 to electrically connect the battery cells 11 to each other, and a housing 3 that accommodates the cell laminate 1.

Meanwhile, thermal runaway may occur in the battery cell 11 due to a short circuit or shock. Since the battery cells 11 are stacked in widthwise direction, heat may be conducted from the ignited cell to the adjacent cells. Accordingly, there is a risk that not only the battery cell 11 but also other battery cells may be ignited in turn, resulting in thermal runaway at the module level.

In addition, the high-temperature gas and flame generated may be discharged upward from the battery cell 11 as the fused portion of the sealed portion 111S melts. The gas and flame may transmit heat to other battery cells within the space in the housing above the cell laminate 1.

In order to prevent such thermal propagation, a solution has been proposed wherein the barrier member 12 is interposed between the battery cells 11. However, the barrier member 12 is problematic in that heat is concentrated in one area to be easily conducted or melted, and has a limitation in that thermal propagation caused by convection of gas and flame through the space above the cell laminate 1 cannot be prevented.

### [DISCLOSURE]

### [TECHNICAL PROBLEM]

In order to solve the problems of the above-described prior art, it is an object of the present invention to provide a structure of a battery module capable of preventing thermal runaway at the module level by preventing heat conduction between cells.

It is another object of the present invention to provide a structure of a battery module capable of preventing local damage to the barrier member or rapid temperature increase by gas and flame caused by ignition of a battery cell.

It is yet another object of the present invention to provide a structure of a battery module provided with a barrier member capable of maintain the structure thereof without deformation even in a high temperature and high pressure environment.

It is yet another object of the present invention to provide a structure of a battery module capable of preventing thermal propagation caused by convection of gas and flame through a space in a housing.

It is yet another object of the present invention to provide a structure of a battery module capable of preventing ignition caused by a short circuit by reinforcing insulation between battery cells and between battery cells and a housing.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery module including: a cell laminate including: a plurality of battery cells laminated in widthwise direction; and at least one barrier member interposed between and laminated together with the plurality of battery cells in widthwise direction; and a housing accommodating the cell laminate, wherein each of the at least one barrier member includes a metal layer and insulating layers provided at two widthwise ends of the metal layer, respectively.

Since the barrier member includes the metal layer, the barrier member may more effectively block the transfer of radiant heat between cells, and increase in the local temperature of the barrier member is suppressed.

It is preferable that the thickness of each of the insulating layers is greater than that of the metal layer. When the thickness of the metal layer increases, the insulating distance between a pair of battery cells with the barrier member interposed therebetween decreases such that the possibility of a short circuit increases. In order to maximize the effects of both the heat dissipation and radiation heat blocking of the metal layer and the effect of insulation between cells by the insulating layer, it is preferable that the metal layer is relatively thinner, and the insulating layer is thicker than the metal layer. In addition, as described below, in order to secure the rigidity of the insulating layer, it is preferable that the insulating layer is thicker than the metal layer.

The insulating layer may include a rigid body. The rigid body refers to a member having a yield strength and/or flexural rigidity equal to or higher than predetermined value. That is, the insulating layer may have rigidity that may structurally resist high-pressure gas and flame discharged caused by ignition of the battery cell.

It is preferable that the insulating layer is heat-resistant. Accordingly, the insulation between cells may be maintained even during a thermal runaway, and the structural rigidity of the barrier member may also be maintained. As the structure of the insulating layer is maintained even at a high temperature, it is advantageous in preventing short circuits between cells and thermal propagation through convection of gas and flame.

The barrier member may include a thermal insulation layer provided at one widthwise end or two widthwise ends of the metal layer. It is preferable that the thermal insulation layer is thicker than the metal layer or the insulating layer.

The thermal insulation layer may be compressible in widthwise direction. Accordingly, the thermal insulation layer may block heat conduction between the battery cells and absorb assembly tolerance and/or swelling of the battery cells, thereby improving the structural stability of the battery module.

For example, the thermal insulation layer may include a porous foam material. Such a foam material provides both thermal insulation and compressibility so as to thermally insulate cells and absorb tolerance.

The thermal insulation layer may be provided on the outer surface of the insulating layer. That is, the thermal insulation layer may be disposed closer to the battery cell compared to the insulating layer. Accordingly, even when the battery cell at first side of the barrier member ignites and the thermal insulation layer melts, the thermal insulation layer provided at second side of the barrier member does not melt such that that the barrier member may still exert an insulating effect..

One end of the barrier member may protrude with respect to one end of the battery cell. As one end of the barrier member protrudes with respect to the battery cell, thermal propagation by convection of gas and flame through the space between the cell laminate and the housing may be blocked. Here, it is preferable that the insulating layer has a heat-resistant rigid body as described above so as to maintain the structure and rigidity thereof against high-pressure gas and flame.

Both of one end of the metal layer and one end of the insulating layer may protrude with respect to one end of the battery cell and one end of the thermal insulation layer. As the one end of the metal layer and the one end of the insulating layer protrude with respect to the thermal insulation layer, the metal layer and the insulating layer may slowly dissipate heat absorbed from the battery cell. Accordingly, a rapid temperature increase of the entire battery module may be prevented.

In order for the barrier member to effectively prevent convection of gas and flame through the space, it is preferable that the protruding length of one end of the barrier member with respect to the one end of the battery cell is at least 1/2 of the shortest distance between the one end of the battery cell and the housing.

A groove facing inward for accommodating the protruding end of the barrier member may be provided on the inner surface of the housing. By accommodating the protruding end of the barrier member in the groove, the space between the cell laminate and the housing may be completely divided in widthwise direction.

The groove may be provided on an insulating cover with insulating properties attached to the inner surface of the housing. Accordingly, the metal layer included in the barrier member is insulated from and the housing so as to more effectively prevent short circuits between the battery cells and between the battery cell and the housing.

The present invention also provides structures of a battery pack including the battery module and a vehicle including the battery pack.

A plurality of battery modules may be integrated into a battery pack to increase the capacity and/or voltage thereof. The battery pack may include an exhaust device capable of discharging gases and flames emitted in an upward direction to the outside when the battery module ignites. The battery pack may be built into a vehicle as a power source. The vehicle may include an electric vehicle, a hybrid vehicle, etc.

### [ADVANTAGEOUS EFFECTS]

The present invention may provide a structure of a battery module capable of preventing thermal propagation between cells by interposing a barrier member having heat-resistant properties and/or insulating properties between battery cells.

The present invention may also provide a structure of a battery module in which thermal conductivity of a barrier member is increased by a metal layer provided in the barrier member, and thermal propagation between cells due to radiant heat and local temperature rise is blocked.

The present invention may also provide a structure of a battery module having a barrier member capable of maintaining the structure thereof without being deformed by high-temperature and high-pressure gas and flame by including a rigid plate having heat resistance.

The present invention may also provide a structure of a battery module in which thermal propagation between cells caused by convection of gas and flame through the space in the housing is blocked by a barrier member disposed in the housing and extending with respect to the cell laminate.

The present invention may also provide a structure of a battery module capable of preventing short circuits in normal condition and in case of cell ignition by employing an insulating layer included in the barrier member and an insulating cover provided in the housing.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a structure of a pouch-type battery cell.
FIG. 2 illustrates the constitution of a cell laminate.
FIGS. 3 and 4 illustrate the structure of a general battery module.
FIG. 5 illustrates a structure of a battery cell according to an embodiment of the present invention.
FIG. 6 illustrates a structure of a barrier member according to an embodiment of the present invention.
FIG. 7 illustrates the configuration of a cell laminate according to an embodiment of the present invention.
FIGS. 8 and 9 illustrate a structure of a battery module according to an embodiment of the present invention.
FIGS. 10 and 11 illustrate a cross-section of a battery module according to an embodiment of the present invention.
FIG. 12 illustrates a main portion of the cross-section of FIG. 11.
FIG. 13 illustrates a barrier member according to an embodiment of the present invention preventing thermal propagation between cells.
FIGS. 14 and 15 illustrate an ignited battery cell in a battery module according to an embodiment of the present invention.
FIGS. 16 and 17 illustrate a structure of a battery pack accommodating a battery module according to an embodiment of the present invention and a vehicle with the battery pack, built therein, respectively.

### [DESCRIPTION OF REFERENCE NUMERALS]

1: cell laminate
   10: cell bank
   11: battery cell
      110: electrode assembly
      111: pouch
         111S: sealed portion
   12: barrier member
      120: metal layer
      121: insulating layer
      122: thermal insulation layer
2: bus bar frame assembly
3: housing
   30: pack frame
   31: top plate
      310: insulating cover
      311: groove
   32: end plate
M: battery module
P: battery pack
V: vehicle
L1: thickness of metal layer
L2: thickness of insulating layer

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [STRUCTURES OF BATTERY CELL AND CELL LAMINATE]

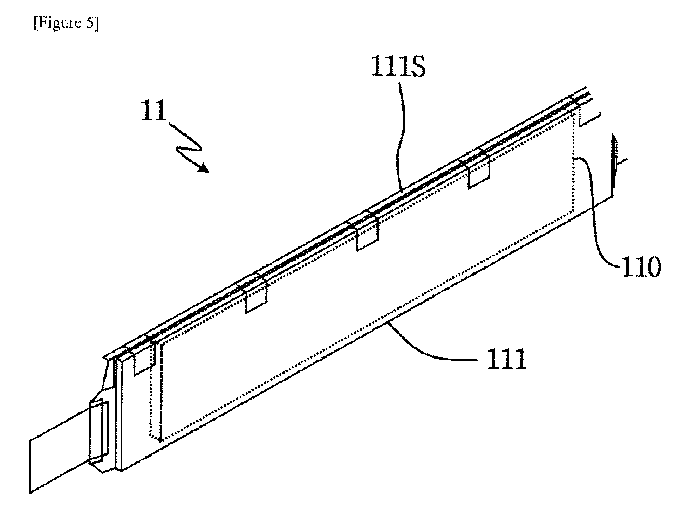

Hereinafter, with reference to FIGS. 5 to 7, a battery cell, a barrier member and a structure of a cell laminate in which the battery cell and the barrier member are laminated according to an embodiment of the present invention will be described in detail.

FIG. 5 illustrates a structure of battery cell according to an embodiment of the present invention. Referring to FIG. 5, a battery cell 11 according to an embodiment of the present invention may include an electrode assembly 110 and a pouch 111 that is sealed to accommodate the electrode assembly 110.

The pouch 111 surrounds the electrode assembly 110 by folding and sealing a sheet in half and is sealed at a sealed portion 111S at one heightwise end thereof. The sealing may be achieved by fusion, melting by high-temperature heat. Therefore, when the battery cell 11 ignites due to a short circuit, etc, it is highly probable that high-temperature gas and flame are discharged from the pouch 111 through the sealed portion 111S.

The battery cell 11 may include an electrode lead extending from the electrode assembly 110 and protruding from the pouch 111. The electrode lead may electrically connect the electrode assembly 110 to the outside.

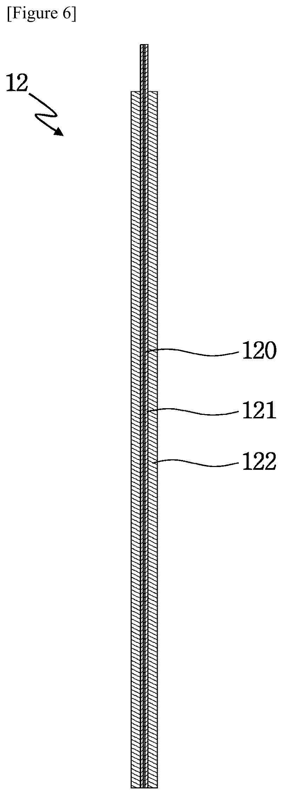

FIG. 6 illustrates a structure of a barrier member according to an embodiment of the present invention. Referring to FIG. 6, the barrier member 12 may include a metal layer 120 and an insulating layer 121 provided at two widthwise ends thereof.

The metal layer 120 may include a metal material having high thermal conductivity. For example, the metal layer 120 may be made of a thin metal foil.

The insulating layer 121 may contain a material with insulating properties. Preferably, the insulating layer 121 is heat-resistant and has a predetermined flexural rigidity. For example, the insulating layer 121 may include a synthetic resin or mica material with insulating properties and heat-resistance and having a predetermined thickness or more.

It is preferable that the insulating layer 121 is thicker than the metal layer 120.

The barrier member 12 may include a thermal insulation layer 122 provided at two widthwise ends of the metal layer 120. Preferably, the thermal insulation layer 122 is provided on the outer surface of the insulating layer 121.

It is preferable that the thermal insulation layer 122 is compressible in widthwise direction. For example, the thermal insulation layer 122 may include a porous foam material having excellent insulation properties and compressibility. However, the material of the thermal insulation layer 122 is not limited thereto.

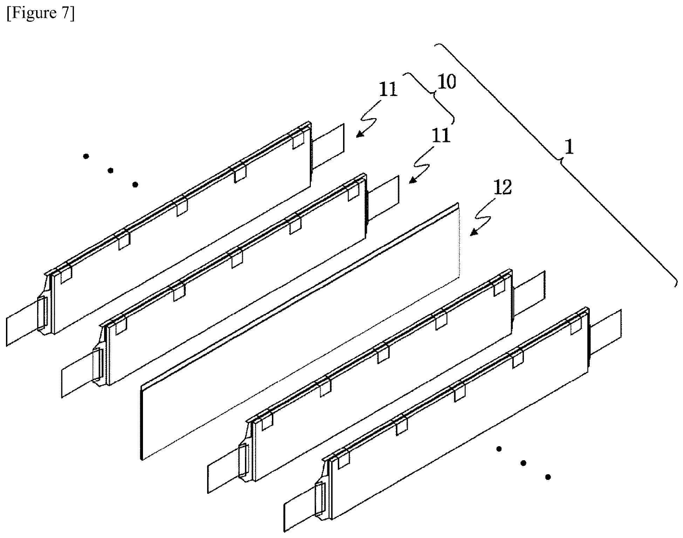

FIG. 7 illustrates the configuration of a cell laminate according to an embodiment of the present invention. Referring to FIG. 7, the battery cells 11 may be stacked in a widthwise direction to form a cell laminate 1. Here, one or more barrier members 12 may be provided.

One or more battery cells 100, divided by the barrier members 110, may be integrated into one or more cell banks 10. Here, the barrier members 12 may prevent thermal propagation between the cell banks 10 and short circuits between the battery cells 11 by including the insulating layer 121.

When the barrier members 12 include the compressible thermal insulation layer 122, the barrier members 12 may absorb assembly tolerances between the cell banks 10 or swelling of the battery cells 11.

### [GENERAL STRUCTURE OF BATTERY MODULE]

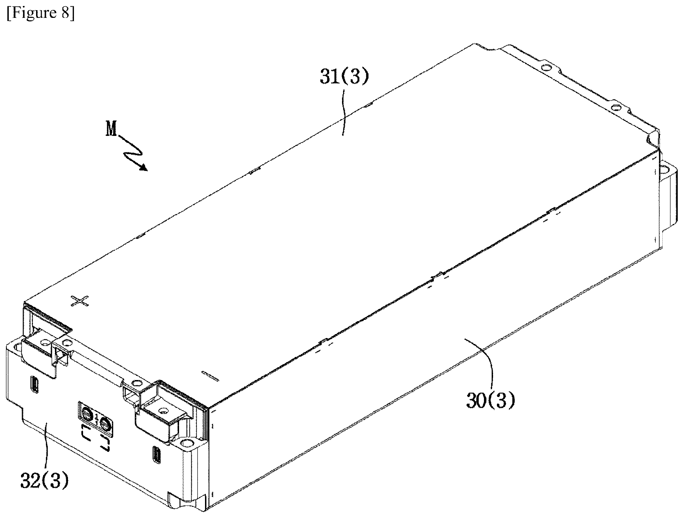

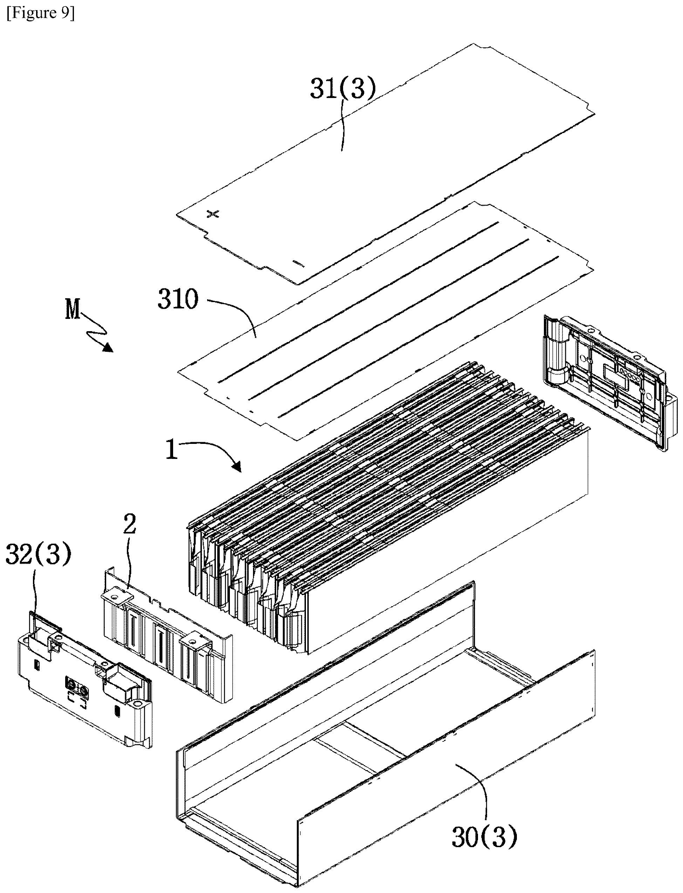

Hereinafter, with reference to FIGS. 8 and 9, a general structure of a battery module according to an embodiment of the present invention will be described.

FIGS. 8 and 9 illustrate a structure of a battery module according to an embodiment of the present invention. Referring to FIGS. 8 and 9, the cell laminate 1 may be accommodated in a housing 3 to form a battery module M.

A bus bar frame assembly 2 may be coupled to the first lengthwise end of the cell laminate 1.

The bus bar frame assembly 2 may include a pair of terminals protruding from the housing 3 for electrically connecting the electrode leads to each other and electrically connecting the entire cell laminate 1 to the outside.

The bus bar frame assembly 2 may include a bus bar frame which is a main body, a slit where the electrode leads is passed through, and a bus bar to which the electrode leads passed through the slit is connected.

The housing 3 may include: a pack frame 30 having a bottom surface and a pair of sidewalls and accommodating the cell laminate 1; a pair of end plates 32 covering the front and rear portions of the cell laminate 1, and a top plate 31 covering the upper portion of the cell laminate 1.

An exhaust hole (not shown) may be provided in the top plate 31 to discharge gas and flame generated from the cell laminate 1 in upward direction. It is preferable that a plurality of the exhaust holes (not shown) be provided for the structural rigidity of the top plate 31 and smooth discharge of gas.

An insulating cover 310 may be attached to the bottom surface of the top plate 31 to insulate the cell laminate 1 from the top plate 31. It is preferable that the insulating cover 310 is made of a material with insulating properties and is heat-resistant.

### [ARRANGEMENT STRUCTURE OF BARRIER MEMBER]

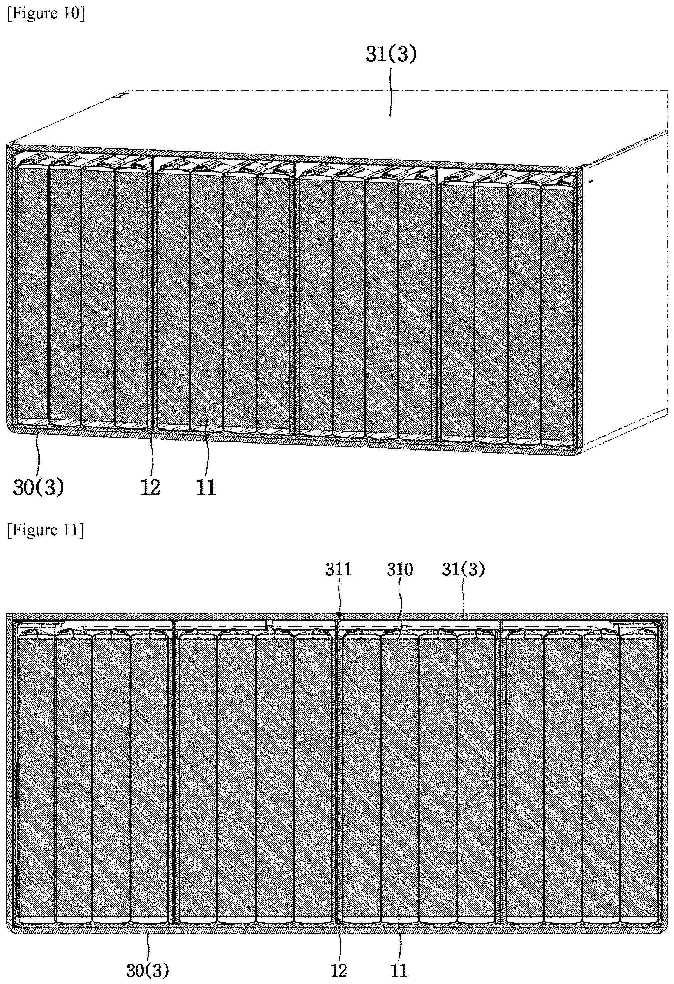

Hereinafter, with reference to FIGS. 10 to 12, a specific arrangement structure of a barrier member according to an embodiment of the present invention will be described in detail.

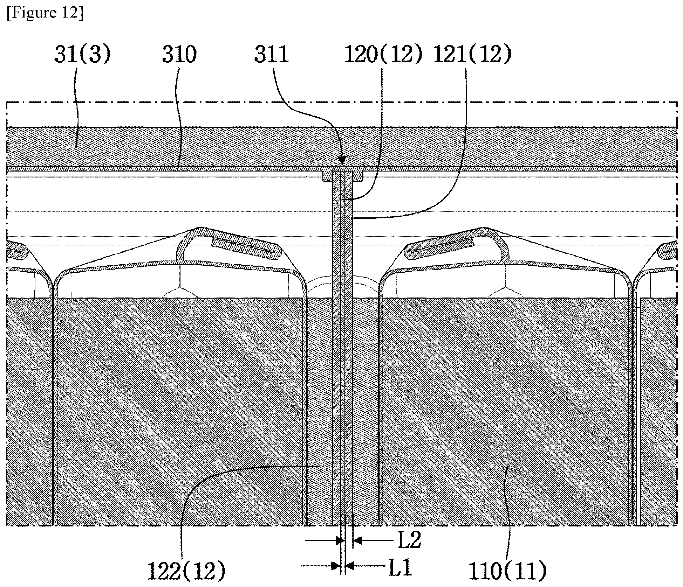

FIGS. 10 and 11 illustrate a cross-section of a battery module according to an embodiment of the present invention, and FIG. 12 illustrates a main portion of the cross-section of FIG. 11. Referring to FIGS. 10 to 12, one end of the barrier member 12 may protrude with respect to one end of the battery cell 11. That is, a predetermined space may be provided between the cell laminate 1 and the housing 3, and one end of the barrier member 12 may extend toward the housing 3 within the space.

Here, since the thickness L2 of the insulating layer 121 is greater than the thickness L1 of the metal layer 120, it is preferable that the decrease in the insulating distance between cells due to the metal layer 120 is minimized, and at the same time, the rigidity of the insulating layer 121 and the supporting force for the metal layer 120 are further increased. As the insulating layer 121 has an appropriate thickness and rigidity, the protruding end of the barrier member 12 may maintain the structure thereof without being deformed by high-pressure, high-temperature gas and flame.

According to the embodiment of the present invention, one end of the metal layer 120 and one end of the insulating layer 121 may protrude with respect to one end of the thermal insulation layer 122. Accordingly, the barrier member 12 may slowly dissipate heat absorbed from the battery cell 11 through the protruding portion without the thermal insulation layer 122, thereby preventing a rapid temperature rise of the cell laminate 1.

A groove 311 for accommodating a protruding end of the barrier member 12 may be provided on the inner surface of the housing 3. Specifically, a groove 311 may be provided on the inner surface of the top plate 31. By accommodating the protruding end of the barrier member 12 in the groove 311, the space is completely partitioned in widthwise direction, thereby more effectively blocking the propagation of gas and flame.

The groove 311 may be provided on the insulating cover 310. Accordingly, the possibility of a short circuit between the battery cells 11 through the metal layer 120 may be reduced.

### [EFFECT OF BARRIER MEMBER IN PREVENTING THERMAL PROPAGATION]

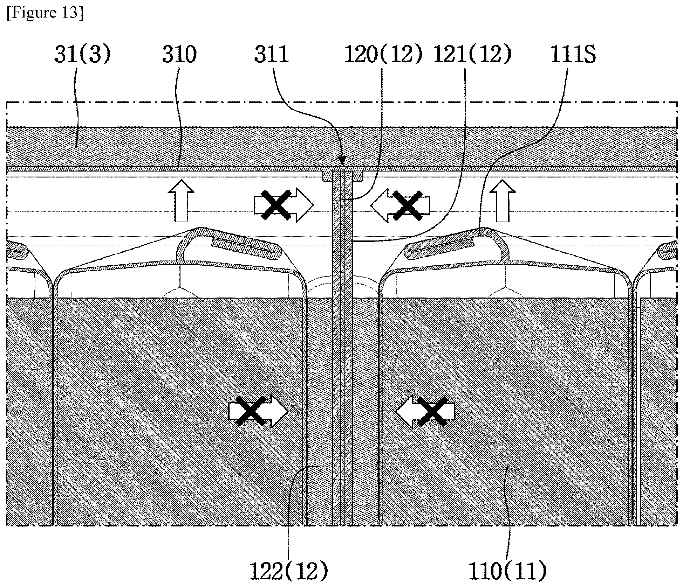

Hereinafter, with reference to FIGS. 13 to 15, the effect of the barrier member in preventing thermal propagation between cells in normal conditions and in case of cell ignition according to an embodiment of the present invention will be described in detail.

FIG. 13 illustrates a barrier member according to an embodiment of the present invention preventing thermal propagation between cells. Referring to FIG. 13, when one of the battery cells 11 ignites, the heat generated from the battery cell 11 is radiated and/or conducted to the adjacent battery cell such that thermal runaway at the module level may occur due to a serial ignition.

According to the embodiment of the present invention, since the barrier member 12 includes the metal layer 120, a rise in local temperature of the barrier member 12 is suppressed in case of heating of a local portion of the barrier member 12, and heat may be distributed to the entire barrier member 12.

In particular, when the metal layer 120 protrudes with respect to the thermal insulation layer 122, the barrier member 12 may prevent a rapid temperature rise of the cell laminate 1 by serving as a heatsink fin that slowly dissipates heat absorbed from the battery cell 11.

When the battery cell 11 ignites, high-temperature gas and flame may be emitted upward from the upper portion of the cell laminate 1 where the sealed portion 111 S is provided. Such gas and flame may be transmitted to other battery cells disposed in the space between the cell laminate 1 and the housing 3, causing thermal runaway at the module level.

According to the embodiment of the present invention, since the barrier member 12 protrudes with respect to the battery cell 11 and extends into the space of the housing 3, the space between the cell laminate 1 and the housing 3 may be divided in widthwise direction. Accordingly, thermal propagation between cells due to convection of gas and flame through the space may be blocked.

When the insulating layer 121 has flexural rigidity and heat resistance, the barrier member 12 may maintain the division of the space without being deformed by high-temperature and high-pressure gas and flame.

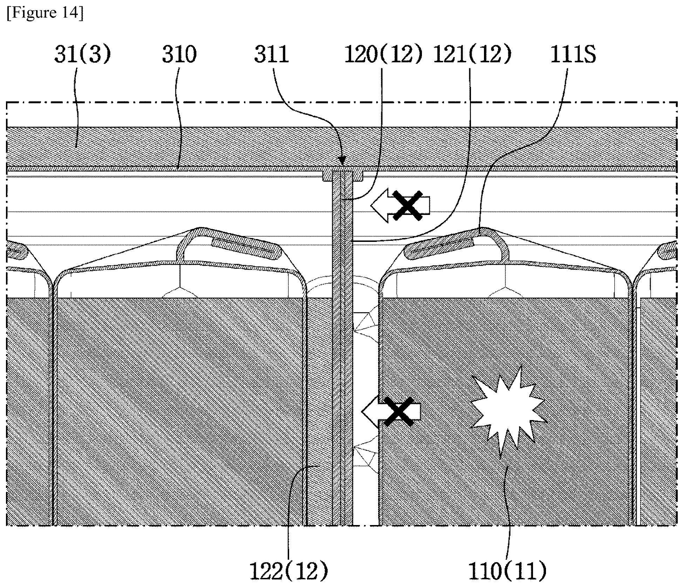

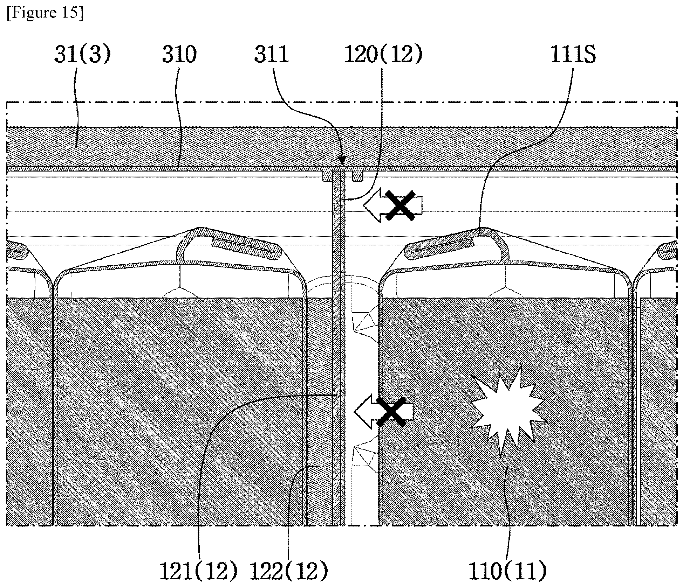

FIGS. 14 and 15 illustrate an ignited battery cell in a battery module according to an embodiment of the present invention. Referring to FIGS. 14 and 15, when the battery cell 11 adjacent to first side of the barrier member 12 ignites, the thermal insulation layer 122 and/or the insulating layer 121 may be melted due to the high-temperature heat. Here, the metal layer 120 may not melt by at high-temperatures heat due to the high melting point thereof.

According to the embodiment of the present invention, the insulating layer 121 and/or the thermal insulation layer 122 provided the second side of the barrier member 12 may not melt due to the heat dissipation effect of the metal layer 120. Accordingly, the barrier member 12 may maintain the structure thereof against high-temperature and high-pressure gas and flame while preventing thermal propagation due to radiation, convection, and/or conduction, and may prevent short circuits between cells.

### [STRUCTURES OF BATTERY PACK AND VEHICLE]

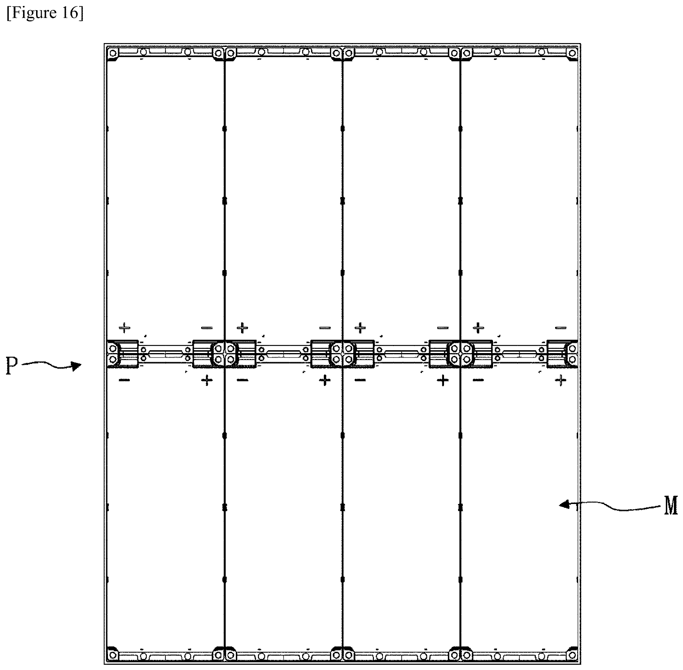

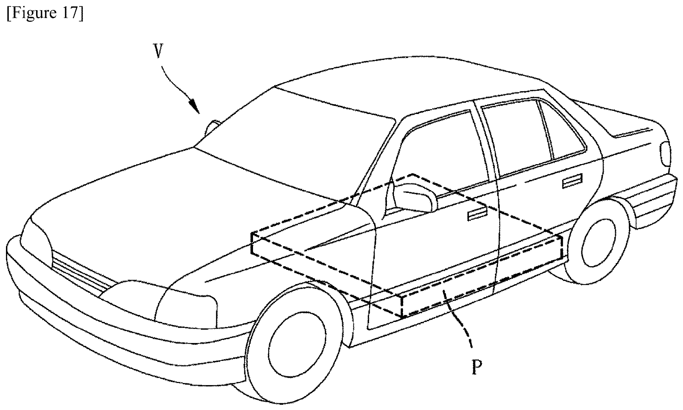

Hereinafter, with reference to FIGS. 16 and 17, the structure of a battery pack accommodating a battery module according to an embodiment of the present invention and a vehicle incorporating the same will be described.

FIGS. 16 and 17 illustrate a structure of a battery pack accommodating a battery module according to an embodiment of the present invention and a vehicle with the battery pack, built therein, respectively. Referring to FIGS. 17 and 18, a plurality of battery modules M may be integrated to form a battery pack P for increasing the capacity and/or voltage. The battery pack P may include an exhaust device capable of discharging gas and flame from an ignited battery module M. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a cell laminate comprising: a plurality of battery cells laminated in widthwise direction; and at least one barrier member interposed between and laminated together with the plurality of battery cells in widthwise direction; and
a housing accommodating the cell laminate,
wherein each of the at least one barrier member is rigid and comprises a metal layer and insulating layers provided at two widthwise ends of the metal layer, respectively, and
a thickness of each of the insulating layers is greater than that of the metal layer.

2. The battery module of claim 1, wherein the insulating layer is heat-resistant.

3. The battery module of claim 1, wherein each of the at least one barrier member further comprises a thermal insulation layer provided at one widthwise end or two widthwise ends of the metal layer.

4. The battery module of claim 3, wherein the thermal insulation layer is compressible in widthwise direction.

5. The battery module of claim 4, wherein the thermal insulation layer is provided on outer surface of the insulating layers.

6. The battery module of claim 1, wherein one end of each of the at least one barrier member protrudes with respect to one end of each of the plurality of battery cells.

7. The battery module of claim 3, wherein both of one end of the metal layer and one end of each of the insulating layers protrude with respect to both of one end of each of the plurality of the battery cells and one end of the thermal insulation layer.

8. The battery module of claim 6, wherein a protruding length of the one end of each of the at least one barrier member with respect to the one end of each of the plurality of the battery cells is at least 1/2 of the shortest distance between the one end of each of the plurality of battery cells and the housing.

9. The battery module of claim 6, wherein a groove facing inward is provided on an inner surface of the housing for accommodating the one end of each of the at least one barrier member protruding toward the inner surface of the housing.

10. The battery module of claim 9, wherein the groove is provided on an insulating cover attached to the inner surface of the housing and containing a material with insulating properties.

11. A battery module comprising:
a cell laminate comprising: a plurality of battery cells laminated in widthwise direction; and at least one barrier member interposed between and laminated together with the plurality of battery cells in widthwise direction; and
a housing accommodating the cell laminate,
wherein each of the at least one barrier member comprises a metal layer, rigid insulating layers provided at two widthwise ends of the metal layer, respectively, and thermal insulation layers provided at widthwise ends of the insulating layers, respectively, and
the thermal insulation layers are compressible in widthwise direction.

12. The battery module of claim 11, wherein the insulating layer is heat-resistant.

13. The battery module of claim 11, wherein one end of each of the at least one barrier member protrudes with respect to that of each of the plurality of battery cells.

14. The battery module of claim 13, wherein both of one end of the metal layer and one end of each of the insulating layers protrude with respect to both of one end of each of the plurality of the battery cells and one end of the thermal insulation layer.

15. The battery module of claim 13, wherein a groove facing inward is provided on an inner surface of the housing for accommodating the one end of each of the at least one barrier member protruding toward the inner surface of the housing.

16. A battery pack comprising a battery module of any one of claims 1 to 15.

17. A vehicle comprising a battery pack of claim 16.
